# EUROPEAN PATENT SPECIFICATION

(11) **EP 3 598 024 B1**
(45) Date of publication and mention of the grant of the patent: **22.05.2024**
(21) Application number: 18776762.9
(22) Date of filing: 28.02.2018
(51) Int. Cl.: F25B 1/00, F24F 11/46, F24F 11/77, F25B 27/00, F25B 13/00, F25B 49/02

(54) **HEAT PUMP**
WÄRMEPUMPE
POMPE À CHALEUR

(30) Priority: 27.03.2017 JP 2017061547
(43) Date of publication of application: 22.01.2020
(73) Proprietor: Yanmar Power Technology Co., Ltd., Osaka City (JP)
(72) Inventor: NAKAMURA, Hirotaka, Osaka-shi Osaka 530-0014 (JP); OKADA, Hideshi, Osaka-shi Osaka 530-0014 (JP); IKEDA, Takayuki, Osaka-shi Osaka 530-0014 (JP); OKUDA, Norihiro, Osaka-shi Osaka 530-0014 (JP)
(74) Representative: Dennemeyer & Associates S.A.
(86) International application number: PCT/JP2018/007664
(87) International publication number: WO 2018/180161

(56) References cited:
- WO-A1-03/046444
- GB-A- 2 209 851
- JP-A- S6 110 978
- JP-A- H03 122 438
- JP-A- H07 305 904
- JP-A- S58 138 938
- JP-A- 2008 267 643
- JP-A- 2012 007 868
- JP-A- 2012 007 868
- JP-A- 2015 004 444
- JP-A- 2015 132 412
- JP-A- 2015 224 799

## Description

### Technical Field

The present invention relates to a heat pump including an engine-driven compressor driven by an engine and an electric compressor driven by a compressor motor.

### Background Art

A hybrid heat pump including an engine-driven compressor and an electric compressor has been long known. Patent Literature 1 (hereinafter, PTL 1) and Patent Literature 2 (hereinafter, PTL 2) disclose such hybrid heat pumps.

PTL 1 describes that, based on air conditioning load, balance of output between a gas heat pump conditioner that uses an engine-driven compressor (a first compressor) and an electrical heat pump conditioner that uses an electric compressor (a second compressor) is decided. PTL 1 further describes that switching is performed between control where importance is placed on the efficiency or life of the gas heat pump conditioner and control where importance is placed on the life of the electrical heat pump conditioner and on suppression of increase in the amount of contract power (power consumption).

PTL 2 describes that a gas heat pump conditioner and an electrical heat pump conditioner are driven according to a predetermined schedule. PTL 2 further describes that only one of the gas heat pump conditioner and the electrical heat pump conditioner is driven. Prior art document JP 2012-7868 describes a heat pump according to the preamble of claim 1.

### Citation List

### Patent Literature

PTL 1: Japanese Patent Application Laid-Open No. 2007-187342
PTL 2: Japanese Patent Application Laid-Open No. 2012-7867

### Summary of Invention

### Technical Problem

However, each of PTL 1 and PTL 2 merely describes that the output ratio between the gas heat pump conditioner and the electrical heat pump conditioner is adjusted so as to suppress increase in power consumption. Even if power consumption increases only instantaneously, suitable equipment, electrical contract, or the like for the degree of power consumption is required.

The present invention has been made in view of such circumstances and its main object is to provide a configuration for suppressing instantaneous increase in power consumption in a hybrid heat pump including an engine-driven compressor and an electric compressor.

### Solution to Problem and Advantageous Effects of Invention

Problems to be solved by the invention are as described above, and next, solutions for solving the problems and advantages thereof will be described.

In an aspect of the present invention, a heat pump having the following configuration is provided. That is, the heat pump includes an engine, a compressor motor, an electric compressor, an electric actuator different from the compressor motor and the electric compressor, a compressor driven by the engine, and a controller. The engine is configured to be started by a starter motor and drive an engine-driven compressor. The electric compressor is configured to be driven by the compressor motor. The compressor driven by the engine is connected in parallel with the electric compressor. The controller is configured to perform at least one of engine starting control and electric compressor starting control. In the engine starting control, the controller lowers or maintains output of at least one of the electric compressor and the electric actuator at an engine starting timing, and raises the output of the at least one of the electric compressor and the electric actuator after starting of the engine. In the electric compressor starting control, the controller lowers or maintains output of the electric actuator at an electric compressor starting timing, and raises the output of the electric actuator after starting of the electric compressor. The electric actuator includes a plurality of fans and frequency of the fans and the electric compressor is lowered during the startup of the compressor driven by the engine.

With the above-described configuration, at the engine starting timing or electric compressor starting timing, concentration of power consumption at a timing can be prevented by lowering output of another electrical apparatus or putting the starting of the apparatus on stanby. Accordingly, instantaneous increase in power consumption can be avoided.

The heat pump may preferably be configured as follows. That is, when the engine starting control is performed, at the engine starting timing, the output of the at least one of the electric compressor and the electric actuator that are driven is temporarily lowered. When the electric compressor starting control is performed, at the electric compressor starting timing, the output of the electric actuator that is driven is temporarily lowered.

Thus, even while the electric compressor or electric actuator is driven, concentration of power consumption at a timing can be prevented by temporarily lowering the output thereof. Accordingly, instantaneous increase in power consumption can be avoided.

The heat pump may preferably be configured as follows. That is, the electric actuator includes a plurality of fans for performing heat exchange. When the controller performs at least one of the engine starting control and the electric compressor starting control, the controller raises output of at least one of the fans after the starting of the engine or the electric compressor, and subsequently raises output of the remaining one or more fans.

Thus, concentration of power consumption at a timing can be prevented by varying timings to raise the output of the plurality of fans. Accordingly, instantaneous increase in power consumption can be avoided.

### Brief Description of Drawings

[FIG. 1] A refrigerant circuit diagram of a heat pump according to an embodiment of the present invention.
[FIG. 2] A block diagram illustrating an electrical configuration of the heat pump.
[FIG. 3] A timing chart illustrating a case where an engine is started while an electric compressor is not driven.
[FIG. 4] A timing chart illustrating a case where the electric compressor is started while the engine is not driven.
[FIG. 5] A timing chart illustrating a case where the engine is started while the electric compressor is driven.
[FIG. 6] A timing chart illustrating a case where the electric compressor is started while the engine is driven.

### Description of Embodiments

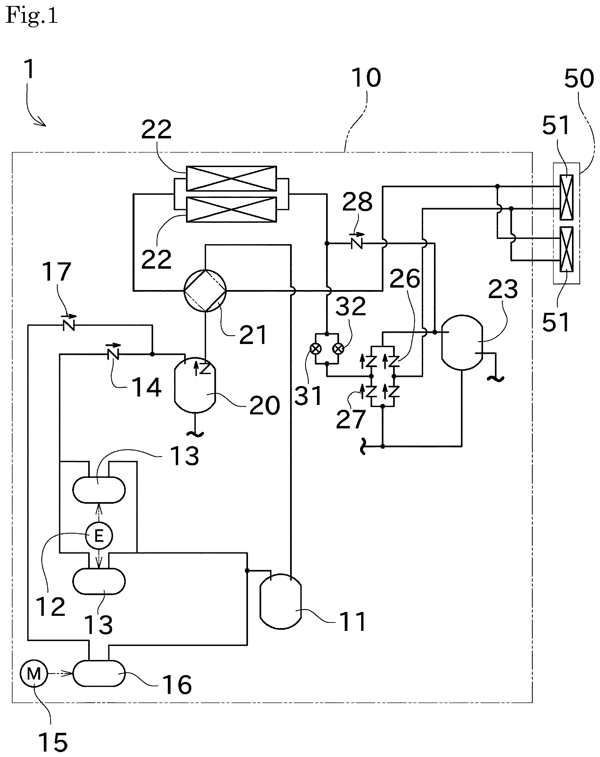

Embodiments of the present invention are described below with reference to the drawings. First, an air conditioner that includes a heat pump 1 according to an embodiment and is used for a building is described with reference to FIG. 1. FIG. 1 is a refrigerant circuit diagram of the heat pump 1.

As illustrated in FIG. 1, the heat pump 1 includes an outdoor unit 10 and an indoor unit 50. The heat pump 1 can raise or lower the temperature of air in a room where the indoor unit 50 is placed by performing heat exchange between outdoor heat exchangers 22 of the outdoor unit 10 and indoor heat exchangers 51 of the indoor unit 50 using a refrigerant.

The outdoor unit 10 includes an engine 12 and a compressor motor 15 as power sources. The engine 12 is a gas engine, which generates power by burning supplied gas and drives two engine-driven compressors 13. The number of engine-driven compressors 13 driven by the engine 12 may be one or be three or more. Fuel for the engine 12 is not limited to gas and may be, for example, gasoline or light oil.

The compressor motor 15 generates power using supplied power and drives one electric compressor 16. The compressor motor 15 may drive a plurality of electric compressors 16. Thus, the heat pump 1 according to the present embodiment is a hybrid heat pump, where an engine and an electric motor drive compressors. The heat pump 1 may include a plurality of engines 12 and/or a plurality of compressor motors 15.

The engine-driven compressors 13 and the electric compressor 16 suck the refrigerant, which is in a gaseous form, from an accumulator 11. The accumulator 11 is a member for storing the gaseous refrigerant. In the accumulator 11, the refrigerant is in a low-temperature and low-pressure gaseous form. The refrigerant in the accumulator 11 becomes a high-temperature and high-pressure gaseous form by being compressed by the engine-driven compressors 13 and the electric compressor 16. The engine-driven compressors 13 discharge the refrigerant to an oil separator 20 through a first check valve 14. The electric compressor 16 discharges the refrigerant to the oil separator 20 through a second check valve 17.

The oil separator 20 separates lubricating oil for the engine-driven compressors 13 and the electric compressor 16 from the gaseous refrigerant. The separated lubricating oil is returned to the engine-driven compressors 13 and the electric compressor 16 through an unillustrated circuit. The gaseous refrigerant from which the lubricating oil is separated by the oil separator 20 is supplied to a four-way valve 21.

The four-way valve 21 includes four ports and varies the destination of the supply of the refrigerant for heating and cooling. First, flow of the refrigerant during heating is described.

During heating, the four-way valve 21 supplies the gaseous refrigerant to the indoor heat exchangers 51 as indicated with the solid lines in FIG. 1. The indoor heat exchanger 51 performs heat exchange for transferring heat from the refrigerant to indoor air. This heat exchange raises the temperature of the indoor air. This heat exchange also changes the refrigerant into a form of low-temperature and high-pressure liquid. In FIG. 1, the number of the indoor heat exchangers 51 provided is two, which may, however, be one or be three or more. The refrigerant that has changed into a liquid form through the heat exchange by the indoor heat exchangers 51 is supplied to a receiver 23 through third check valves 26.

The receiver 23 is a member for storing the liquid refrigerant. The refrigerant supplied to the receiver 23 flows through fourth check valves 27 and then through a first expansion valve 31 or a second expansion valve 32 to be supplied to the outdoor heat exchangers 22. The liquid refrigerant becomes like mists and low in pressure by flowing through the first expansion valve 31 or the second expansion valve 32. In the heat pump 1 according to the present embodiment, the two outdoor heat exchangers 22 are provided. The number of the outdoor heat exchangers 22 may be one or be three or more.

The outdoor heat exchangers 22 perform heat exchange for transferring heat from outdoor air to the refrigerant. This heat exchange changes the refrigerant into a gaseous form. The gaseous refrigerant is supplied to the accumulator 11 through the four-way valve 21. The gaseous refrigerant is stored in the accumulator 11.

Next, flow of the refrigerant during cooling is described. During cooling, the four-way valve 21 supplies the gaseous refrigerant to the outdoor heat exchangers 22 as indicated with the chain lines in FIG. 1. The outdoor heat exchangers 22 perform heat exchange for transferring heat from the refrigerant to outdoor air. This heat exchange changes the refrigerant into a form of low-temperature and high-pressure liquid. The refrigerant that has changed into a liquid form through the heat exchange by the outdoor heat exchangers 22 is supplied to the receiver 23 through a fifth check valve 28.

The liquid refrigerant supplied to the receiver 23 is supplied to the indoor heat exchangers 51. The indoor heat exchangers 51 perform heat exchange for transferring heat from indoor air to the refrigerant. This heat exchange lowers the temperature of the indoor air. This heat exchange also changes the refrigerant into a form of low-temperature and low-pressure gas. The refrigerant that has undergone the heat exchange by the indoor heat exchangers 51 is supplied to the accumulator 11 through the four-way valve 21. The gaseous refrigerant is stored in the accumulator 11.

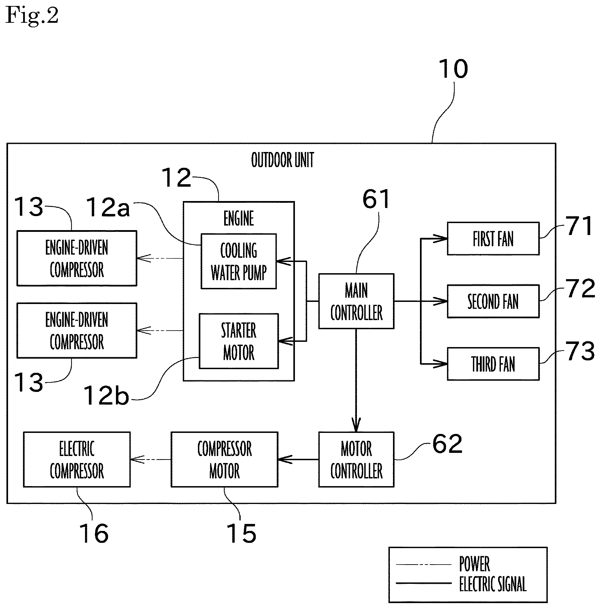

An electrical configuration of the heat pump 1 is described below with reference to FIG. 2. FIG. 2 is a block diagram illustrating the electrical configuration of the heat pump 1. In the description below, actuators that are driven with electricity and exclude the electric compressor 16 and the compressor motor 15 may be simply referred to as "electric actuators."

As illustrated in FIG. 2, the heat pump 1 includes a main controller 61. The main controller 61 is a computer including a CPU, RAM, ROM, and the like, and controls the units in the heat pump 1 by causing programs stored in the ROM to be read out to the RAM and executing the programs. Specifically, as illustrated in FIG. 2, the main controller 61 controls operations of a cooling water pump 12a, a starter motor 12b, the compressor motor 15, a first fan 71, a second fan 72, and a third fan 73. In the control that the main controller 61 performs on the operations, specifically, whether to drive each unit is changed and output during driving is changed.

The cooling water pump 12a is a component for circulating cooling water in the engine 12. The main controller 61 basically continues to drive the cooling water pump 12a while the engine 12 is driven. The starter motor 12b is a component for starting the engine 12. Accordingly, the main controller 61 drives the starter motor 12b at a timing of starting the engine 12 and stops driving the starter motor 12b after the starting of the engine 12. The main controller 61 can adjust the output of the engine 12 by changing the amount of gas to be supplied to a cylinder, or the like.

The main controller 61 controls the operation of the compressor motor 15 using the motor controller 62, which is another hardware. By controlling the operation of the compressor motor 15, the main controller 61 can change whether to drive the compressor motor 15 and change the output during driving.

The first fan 71, the second fan 72, and the third fan 73 are provided near the outdoor heat exchangers 22 of the outdoor unit 10. The first fan 71, the second fan 72, and the third fan 73 are components for increasing the efficiency of heat exchange between outdoor air and the outdoor heat exchangers 22. Thus, while the heat pump 1 is driven, the main controller 61 basically continues to drive the first fan 71, the second fan 72, and the third fan 73.

Although disposed in the outdoor unit 10 in the present embodiment, the main controller 61 may be disposed in the indoor unit 50 or disposed at still another position. In the present embodiment, the main controller 61 is provided for each heat pump 1. A single main controller 61 may control a plurality of heat pumps 1.

The main controller 61 and the motor controller 62 may be configured from the same hardware. For another example, the main controller 61 may control the engine 12, the first fan 71, the second fan 72, and the third fan 73 using another hardware.

Described below is how the main controller 61 controls the operation of each unit in starting the engine 12 or the electric compressor 16. Electric actuators according to the present embodiment are supplied with power from power supply equipment, such as power transmission lines of a building, or the like. These electric actuators are started using the power from the power supply equipment by receiving, for example, predetermined starting signals from the main controller 61.

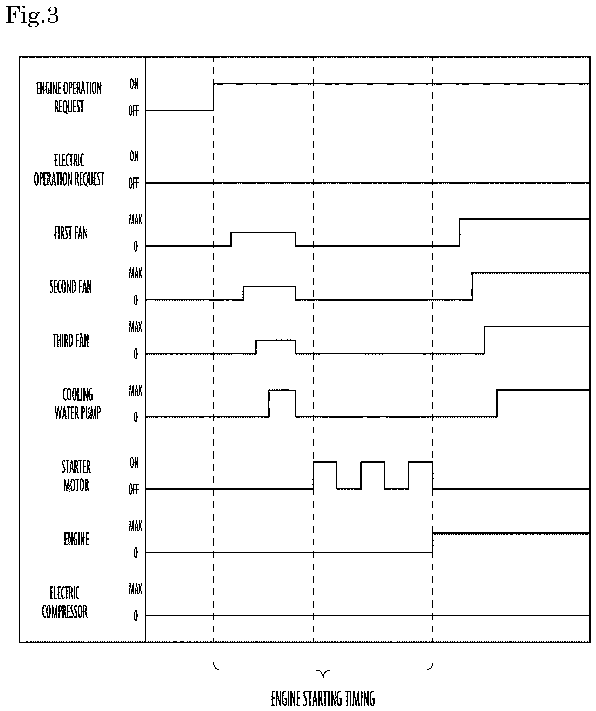

First, a case where the engine 12 is started while the electric compressor 16 is not driven is described with reference to FIG. 3. FIG. 3 is a timing chart illustrating control performed by the main controller 61 in this case.

In FIG. 3 and the drawings thereafter, an engine operation request indicates a result of determination on whether the main controller 61 operates the engine 12, based on which of the engine 12 and the electric compressor 16 takes precedence in being driven, requested air conditioning performance, and the like. Similarly, an electric operation request indicates a result of determination on whether the main controller 61 operates the electric compressor 16, based on the above-named matters. In FIG. 3, the engine operation request and the electric operation request indicate "ON" when their objects are operated and indicate "OFF" when they are not operated.

When both the engine operation request and the electric operation request indicate OFF, none of the electric actuators depicted in FIG. 3 is driven. After that, the main controller 61 starts the first fan 71 first after the engine operation request turns ON. After the completion of the starting of the first fan 71, that is, after the output of the first fan 71 becomes constant, the main controller 61 starts the second fan 72. Similarly, the main controller 61 starts the third fan 73 after the completion of the starting of the second fan 72. Next, the main controller 61 starts the cooling water pump 12a after the completion of the starting of the third fan 73. Typically, an electric actuator consumes a large amount of power at the time of being started. Thus, as in the present embodiment, by varying timings to start the first fan 71, the second fan 72, the third fan 73, and the cooling water pump 12a, concentration of power consumption at a timing can be prevented and accordingly, instantaneous increase in power consumption can be avoided.

After that, the main controller 61 stops driving the first fan 71, the second fan 72, the third fan 73, and the cooling water pump 12a in unison. Since a problem of power consumption is not caused when driving the electric actuators is stopped, the main controller 61 stops driving these electric actuators in unison. The main controller 61 drives the starter motor 12b after the completion of the stopping of driving these electric actuators.

The starter motor 12b is assumed to be driven only for a short time. In the present embodiment, the main controller 61 drives the starter motor 12b again if the engine 12 is not started even after the starter motor 12b is driven. FIG. 3 presents an example in which the engine 12 is successfully started after driving the starter motor 12b three times. In the present embodiment, a timing that is after the engine operation request turns ON from OFF and a process related to the starting of the engine 12 is started and before the engine 12 is actually started is referred to as an "engine starting timing" (see FIG. 3).

Similart to the above, after the starting of the engine 12, the main controller 61 starts the first fan 71, the second fan 72, the third fan 73, and the cooling water pump 12a, sequentially. Thus, in the present embodiment, the main controller 61 temporarily lowers output to zero at an engine starting timing by stopping driving the first fan 71, the second fan 72, the third fan 73, and the cooling water pump 12a, and raises the output after the starting of the engine 12 (in engine starting control). Driving the starter motor 12b needs a large amount of power. When this engine starting control is performed, however, concentration of power consumption at a timing can be prevented and accordingly, instantaneous increase in power consumption can be avoided.

The output of the first fan 71, the second fan 72, and the third fan 73 at an engine starting timing is smaller than the output of the first fan 71, the second fan 72, and the third fan 73 after the starting of the engine 12. Thus, even if the starter motor 12b is driven before the output of the first fan 71, the second fan 72, and the third fan 73 turns zero, concentration of power consumption at a timing can be prevented. Accordingly, instantaneous increase in power consumption can be avoided.

In the engine starting control according to the present embodiment, a process for lowering the output of an electric actuator is performed at an engine starting timing, and raises and restores the output of the electric actuator after the starting of the engine 12. Instead, at an engine starting timing, the output of an electric actuator may be maintained at zero (that is, its starting is put on stanby), and after the starting of the engine 12, the output of the electric actuator may be raised to start the electric actuator.

Thus, in the present embodiment, the engine starting control while the electric compressor 16 is not driven is performed on the first fan 71, the second fan 72, the third fan 73, and the cooling water pump 12a. In other words, the engine starting control is performed on an electric actuator driven if the heat pump 1 is driven and on an electric actuator driven if the engine 12 is driven. The engine starting control in this state may also be performed on an electric actuator driven if the electric compressor 16 is driven.

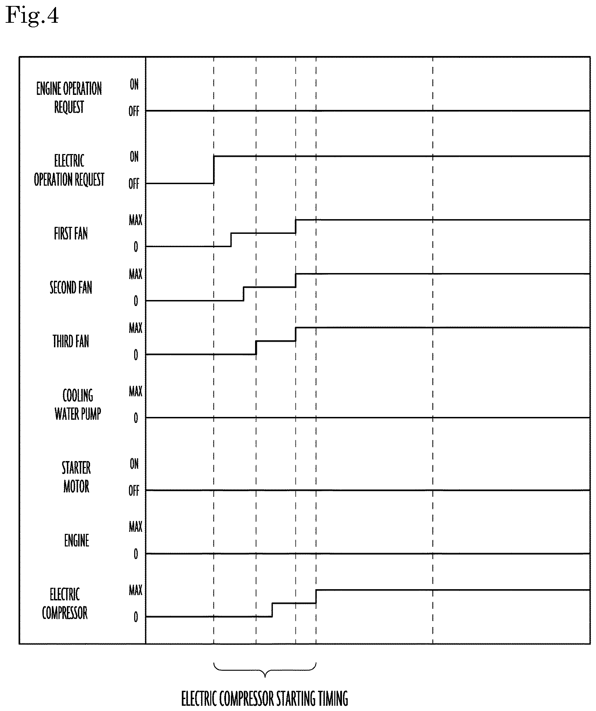

Next, a case where the electric compressor 16 is started while the engine 12 is not driven is described with reference to FIG. 4. FIG. 4 is a timing chart illustrating control performed by the main controller 61 in this case.

Similar to FIG. 3, when the electric operation request turns ON from OFF, the main controller 61 starts the first fan 71, the second fan 72, and the third fan 73, sequentially, so that the output thereof may become smaller than that during a normal time. The output during a normal time of an electric actuator herein represents the output that is set if a process for suppressing the output of an electric actuator is not performed, such as the engine starting control, the electric compressor starting control, or the like. For example, a target value of the output of each electric actuator is set, for example, based on a value detected by a sensor, and the output with the target value constitutes the output during a normal time. For another example, when an electric actuator is continuously driven with a constant output without using a value detected by a sensor, the output constitutes the output during a normal time. The cooling water pump 12a is not started since there is no need to drive the cooling water pump 12a while the electric compressor 16 is driven.

The main controller 61 initiates starting of the electric compressor 16 after the completion of the starting of the third fan 73. As illustrated in FIG. 4, the main controller 61 raises the output of the electric compressor 16 in stages. In the present embodiment, a timing that is after the electric operation request turns ON from OFF so that a process related to the starting of the electric compressor 16 is started and before the output of the electric compressor 16 reaches target output is referred to as an "electric compressor starting timing." Thus, when the output of the electric compressor 16 is increased in stages to reach the target output, the reach at the target output is regarded as completion of the starting of the electric compressor 16. Herein, the target output indicates target output for starting the electric compressor 16 and does not indicate target output changed with surrounding situations, various requests, and the like after the starting of the electric compressor 16.

After the completion of the starting of the third fan 73, the main controller 61 raises the output of the electric compressor 16 to a first output value from zero while maintaining the output of the first fan 71, the second fan 72, and the third fan 73. The first output value is a value before the reach at target output (a second output value) by raising the output of the electric compressor 16 in stages to the target output. Accordingly, the first output value is smaller than the second output value, which is the target output of the electric compressor 16. After causing the output of the electric compressor 16 to reach the first output value, the main controller 61 raises the output of the first fan 71, the second fan 72, and the third fan 73 concurrently to the output during a normal time while maintaining the output of the electric compressor 16 at the first output value. After the output of the first fan 71, the second fan 72, and the third fan 73 reaches the output during a normal time, the main controller 61 raises the output of the electric compressor 16 to the target output.

Power needed to start the electric compressor 16 is smaller than power needed to drive the starter motor 12b. Thus, at a starting timing of the electric compressor 16, the main controller 61 drives the first fan 71, the second fan 72, and the third fan 73 even if the output of the electric compressor 16 is raised from zero. At an electric compressor starting timing, the output of the first fan 71, the second fan 72, and the third fan 73 is smaller than that during a normal time. Thus, at an electric compressor starting timing, concentration of power consumption at a timing can be prevented by causing the output of an electric actuator to be lower than that during a normal time. Accordingly, instantaneous increase in power consumption can be avoided.

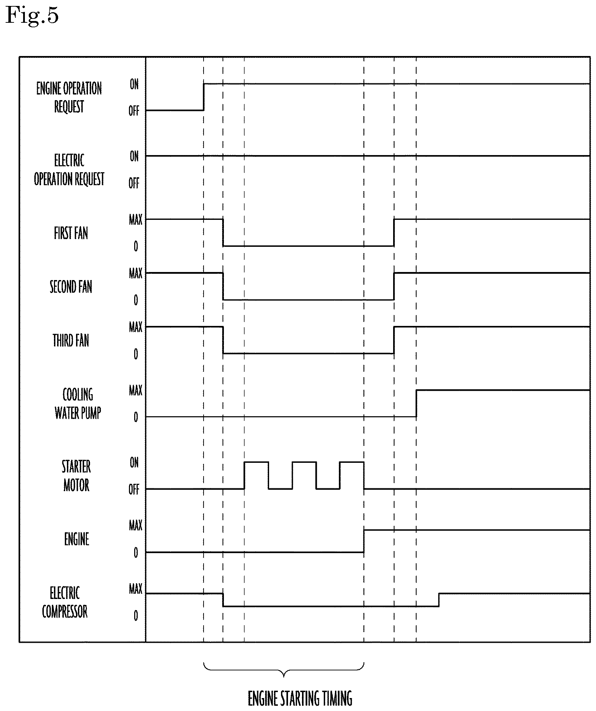

Next, a case where the engine 12 is started while the electric compressor 16 is driven is described with reference to FIG. 5. FIG. 5 is a timing chart illustrating control performed by the main controller 61 in this case.

The driven state of each unit before the engine operation request turns ON is the same as that after the starting of the electric compressor 16 in FIG. 4. When the engine operation request turns ON from this state, the main controller 61 stops driving the first fan 71, the second fan 72, and the third fan 73 and, at the same time, lowers the output of the electric compressor 16. After stopping the first fan 71, the second fan 72, and the third fan 73 and lowering the output of the electric compressor 16 are completed, the main controller 61 drives the starter motor 12b. After the engine operation request turns ON, the main controller 61 may lower the output of part or all of the first fan 71, the second fan 72, and the third fan 73 to a predetermined output value (≠ 0).

After the engine 12 is started by driving the starter motor 12b, the main controller 61 returns the output of the first fan 71, the second fan 72, and the third fan 73 concurrently to the output during a normal time. After all the output of the first fan 71, the second fan 72, and the third fan 73 is returned to the output during a normal time, the main controller 61 returns the output of the electric compressor 16 to preceding target output, which is the output immediately after the engine operation request turned ON.

Thus, in the present embodiment, at an engine starting timing, the main controller 61 temporarily lowers output of the first fan 71, the second fan 72, and the third fan 73 to zero by stopping driving the first fan 71, the second fan 72, and the third fan 73, and temporarily lowers the output of the electric compressor 16 to a predetermined value, and after the starting of the engine 12, the main controller 61 raises the output (in the engine starting control).

When the engine 12 is started while the electric operation request is ON (FIG. 5), the main controller 61 may perform control for starting the first fan 71, the second fan 72, and the third fan 73, sequentially. In contrast, when the engine 12 is started while the electric operation request is OFF (FIG. 3), the main controller 61 may perform control for starting the first fan 71, the second fan 72, and the third fan 73 in unison.

Thus, in the present embodiment, the engine starting control while the electric compressor 16 is driven is performed on the first fan 71, the second fan 72, the third fan 73, and the electric compressor 16. The objects of the engine starting control may exclude the first fan 71, the second fan 72, and the third fan 73, may further include another electric actuator, or may exclude the electric compressor 16.

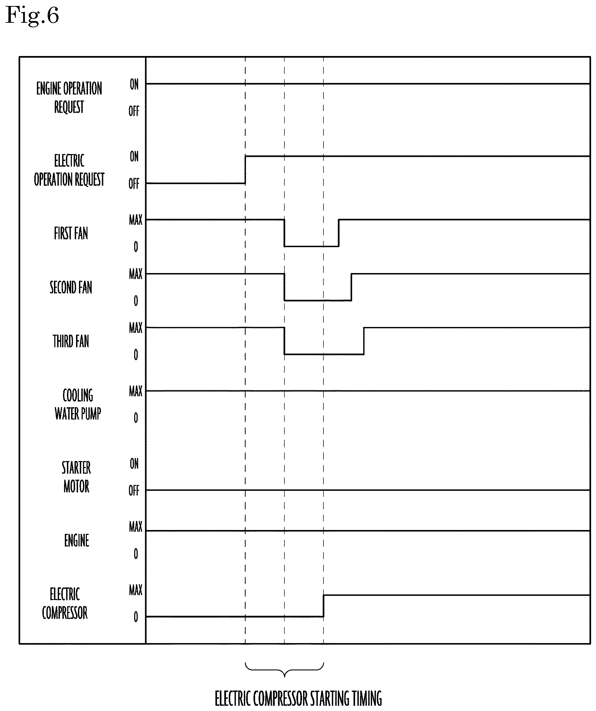

Next, a case where the electric compressor 16 is started while the engine 12 is driven is described with reference to FIG. 6. FIG. 6 is a timing chart illustrating control performed by the main controller 61 in this case.

The driven state of each unit while the electric operation request is OFF is the same as that after the starting of the engine 12 in FIG. 3. When the electric operation request turns ON from this state, the main controller 61 stops driving the first fan 71, the second fan 72, and the third fan 73 in unison and makes the output thereof zero. As for the cooling water pump 12a, necessary power is smaller than that of the first fan 71, the second fan 72, and the third fan 73 and is less influential and thus, the same output as that during a normal time is maintained.

The main controller 61 raises the output of the electric compressor 16 after stopping driving all the first fan 71, the second fan 72, and the third fan 73. At this time, unlike FIG. 4, the electric compressor 16 raises the output to target output in one go rather than in stages. After the output of the electric compressor 16 has risen to the target output, the main controller 61 starts the first fan 71, the second fan 72, and the third fan 73, sequentially, and raises the output thereof to the output during a normal time.

Thus, in the present embodiment, at an electric compressor starting timing, the main controller 61 temporarily lowers the output of the first fan 71, the second fan 72, and the third fan 73 to zero by stopping driving the first fan 71, the second fan 72, and the third fan 73 and, after the starting of the electric compressor 16, raises the output (in the electric compressor starting control). Thus, the first fan 71, the second fan 72, and the third fan 73 are stopped at the time of starting the electric compressor 16 which is a time when necessary power increases. Therefore, concentration of power consumption at a timing can be prevented and accordingly, instantaneous increase in power consumption can be avoided.

As described above, the heat pump 1 according to the present embodiment includes the engine 12, the electric compressor 16, the electric actuators different from the compressor motor 15 and the electric compressor 16, and the main controller 61. The engine 12 is started by the starter motor 12b and drives the engine-driven compressors 13. The electric compressor 16 is driven by the compressor motor. The main controller 61 performs the engine starting control and the electric compressor starting control. In the engine starting control, the main controller 61 lowers or maintains the output of at least one of the electric compressor 16 and the electric actuators at an engine starting timing, and raises the output thereof after the starting of the engine 12. In the electric compressor starting control, the main controller 61 lowers or maintains the output of the electric actuators at a starting timing of the electric compressor 16, and raises the output thereof after the starting of the electric compressor 16.

With the above-described configuration, at an engine starting timing or electric compressor starting timing, concentration of power consumption at a timing can be prevented by lowering the output of the electric actuators and/or the electric compressor 16 or maintaining the output at a value lower than that during a normal time. Accordingly, instantaneous power consumption can be avoided. Typically, even if power consumption increases only instantaneously, equipment suitable for the degree of the power consumption is required. In an electrical contract, the contract power may be decided, depending on the maximum power in a relatively short period (for example, in about a few minutes to an hour). Accordingly, as achieved by the heat pump 1 according to the present embodiment, the cost of power can be largely reduced simply by preventing instantaneous increase in power consumption.

Further, when the engine starting control is performed in the heat pump 1 according to the present embodiment, the output of at least one of the electric compressor 16 and the electric actuator that are driven is temporarily lowered at an engine starting timing. When the electric compressor starting control is performed, the output of the electric actuator that is driven is temporarily lowered at a starting timing of the electric compressor 16.

Thus, even while the electric compressor 16 or the electric actuator are driven, concentration of power consumption at a timing can be prevented by temporarily lowering the output thereof. Accordingly, instantaneous power consumption can be avoided.

Moreover, in the heat pump 1 according to the present embodiment, the electric actuator includes the first fan 71, the second fan 72, and the third fan 73 for performing heat exchange. In performing at least one of the engine starting control and the electric compressor starting control, the main controller 61 raises the output of the first fan 71 after the starting of the engine 12 or the electric compressor 16. After that, the main controller 61 raises the output of the second fan 72 and subsequently raises the output of the third fan 73.

Thus, concentration of power consumption at a timing can be prevented by varying the timings to raise the output of the plurality of fans. Accordingly, instantaneous power consumption can be further suppressed.

Although a preferred embodiment of the present invention has been described above, the above-described configuration can be modified, for example, as follows.

When the engine 12 is started while the electric compressor 16 is not driven (FIG. 3), the process of starting the electric actuator including the first fan 71, the second fan 72, the third fan 73, the cooling water pump 12a, and the like at an engine starting timing can be omitted. In this case, at the engine starting timing, the output of these electric actuators is maintained at zero and, after the starting of the engine 12, the output is raised (in the engine starting control).

When the electric compressor 16 is started while the engine 12 is not driven (FIG. 4), at an electric compressor starting timing, similar to FIG. 3, the output of the electric actuators, such as the first fan 71, the second fan 72, the third fan 73, and the like, may be temporarily raised and then lowered, and after the starting of the electric compressor 16, the output of the electric actuators may be raised (in the electric compressor starting control). At the electric compressor starting timing, the output may be maintained at zero and, after the starting of the electric compressor 16, the output may be raised.

When the engine 12 is started while the electric compressor 16 is driven (FIG. 5) and if any electric actuator is driven at the time of driving the electric compressor 16, the output of the electric actuator may be maintained at zero or lowered at the engine starting timing, and after the starting of the engine 12, the output may be raised. At the starting of the electric compressor 16, the output may be raised in stages. The output of the electric compressor 16 may be raised earlier than the electric actuator.

When the electric compressor 16 is started while the engine 12 is driven (FIG. 6), at the engine starting timing, output of the cooling water pump 12a may be caused to be zero temporarily or lowered to a predetermined output value (≠ 0), which is lower than a value of a normal time.

Although, in the above-described embodiment, the output of the electric actuator is lowered to zero in the engine starting control and the electric compressor starting control (FIGs. 3, 5, and 6), the output may be lowered to a value that is not zero. Although, in the above-described embodiment, the output of the electric compressor 16 is lowerd to a value that is not zero in the engine starting control (FIG. 5), the output of the electric compressor 16 may be lowered to zero. In this case, the electric compressor 16 is started again. Thus, the electric compressor starting control may be performed again at that time.

Although the above-described embodiment describes an example where the first fan 71, the second fan 72, and the third fan 73 are started one by one (FIGs. 3, 4, and 6), the first fan 71 and the second fan 72 may be started first concurrently and after that, the third fan 73 may be started. For another example, the first fan 71 may be started first and after that, the second fan 72 and the third fan 73 may be started concurrently. Depending on the number of fans, the fans may be started in units of two or more.

The electric actuators described in the above-described embodiment are examples and at least one of the engine starting control and the electric compressor starting control may be performed on another electric actuator. Examples of such another electric actuator can include a heater that heats each unit of the heat pump 1.

Although the heat pump 1 according to the above-described embodiment performs both the engine starting control and the electric compressor starting control, the heat pump 1 may be configured to perform only one of them.

Although the above-described embodiment describes an example where the heat pump 1 is applied to an air conditioner, it is also applicable to other configurations. For example, the heat pump 1 is applicable to refrigerators, water heaters, or the like.

### Reference Signs List

- 1: heat pump
- 10: outdoor unit
- 12: engine
- 13: engine-driven compressor
- 15: compressor motor
- 16: electric compressor
- 12a: cooling water pump (electric actuator)
- 61: main controller (controller)
- 71: first fan (electric actuator)
- 72: second fan (electric actuator)
- 73: third fan (electric actuator)

## Claims

1. A heat pump (1) comprising:
an engine (12) configured to be started by a starter motor and drive an engine-driven compressor (13);
a compressor motor (15);
an electric compressor (16) configured to be driven by the compressor motor (15);
an electric actuator different from the compressor motor (15) and the electric compressor;
a compressor (13) driven by the engine (12) connected in parallel with the electric compressor (16); and
a controller (61) configured to perform at least one of engine starting control and electric compressor starting control, wherein
in the engine starting control, the controller (61) lowers or maintains output of at least one of the electric compressor (16) and the electric actuator at an engine starting timing, and raises the output of the at least one of the electric compressor (16) and the electric actuator after starting of the engine (12), and
in the electric compressor starting control, the controller lowers or maintains output of the electric actuator at an electric compressor starting timing, and raises the output of the electric actuator after starting of the electric compressor, **characterized in that**
the electric actuator includes a plurality of fans (71, 72, 73); and
frequency of the fans (71, 72, 73) and the electric compressor (16) is lowered during the startup of the compressor (13) driven by the engine (12).

2. The heat pump (1) according to claim 1, wherein
when the controller (61) performs the electric compressor starting control, at the electric compressor starting timing, the controller (61) temporarily lowers the output of the electric actuator that is driven.

3. The heat pump (1) according to claim 1, wherein
when the controller (61) performs the at least one of the engine starting control and the electric compressor starting control, the controller (61) raises output of at least one of the fans (71, 72, 73) after the starting of the engine (12) or the electric compressor (16), and subsequently raises output of the remaining one or more fans (71, 72, 73).

4. The heat pump (1) according to claim 2, wherein
when the controller (61) performs the at least one of the engine starting control and the electric compressor starting control, the controller (61) raises output of at least one of the fans (71, 72, 73) after the starting of the engine (12) or the electric compressor (16), and subsequently raises output of the remaining one or more fans (71, 72, 73).

## Patentansprüche

1. Wärmepumpe (1), umfassend:
einen Motor (12), der dazu konfiguriert ist, von einem Anlassermotor angelassen zu werden und einen motorgetriebenen Kompressor (13) anzutreiben;
einen Kompressormotor (15);
einen elektrischen Kompressor (16), der dazu konfiguriert ist, von dem Kompressormotor (15) angetrieben zu werden;
einen elektrischen Aktuator, der sich von dem Kompressormotor (15) und dem elektrischen Kompressor unterscheidet;
einen Kompressor (13), der von dem Motor (12), der zu dem elektrischen Kompressor (16) parallel geschaltet ist, angetrieben wird; und
eine Steuervorrichtung (61), die dazu konfiguriert ist, mindestens eine von Motoranlasssteuerung und Anlasssteuerung des elektrischen Kompressors durchzuführen, wobei
in der Motoranlasssteuerung die Steuervorrichtung (61) die Ausgabe mindestens eines des elektrischen Kompressors (16) und des elektrischen Aktuators an dem Anlasszeitpunkt des Motors senkt oder beibehält, und die Ausgabe des mindestens einen des elektrischen Kompressors (16) und des elektrischen Aktuators nach dem Anlassen des Motors (12) anhebt, und
in der Anlasssteuerung des elektrischen Kompressors die Steuervorrichtung die Ausgabe des elektrischen Aktuators an einem Startzeitpunkt des elektrischen Kompressors senkt oder beibehält, und die Ausgabe des elektrischen Aktuators nach dem Anlassen des elektrischen Kompressors erhöht, **dadurch gekennzeichnet, dass**
der elektrische Aktuator eine Vielzahl von Gebläsen (71, 72, 73) beinhaltet; und
die Frequenz der Gebläse (71, 72, 73) des elektrischen Kompressors (16) während des Hochfahrens des Kompressors (13), der von dem Motor (12) angetrieben wird, gesenkt wird.

2. Wärmepumpe (1) nach Anspruch 1, wobei,
wenn die Steuervorrichtung (61) die Anlasssteuerung des elektrischen Kompressors an dem Anlasszeitpunkt des elektrischen Kompressors durchführt, die Steuervorrichtung (61) die Ausgabe des elektrischen Aktuators, der angetrieben wird, vorübergehend senkt.

3. Wärmepumpe (1) nach Anspruch 1, wobei,
wenn die Steuervorrichtung (61) die mindestens eine der Motoranlasssteuerung und der Anlasssteuerung des elektrischen Kompressors durchführt, die Steuervorrichtung (61) die Ausgabe mindestens eines der Gebläse (71, 72, 73) nach dem Anlassen des Motors (12) oder des elektrischen Kompressors (16) anhebt und anschließend die Ausgabe des verbleibenden einen oder der verbleibenden mehreren Gebläse (71, 72, 73) anhebt.

4. Wärmepumpe (1) nach Anspruch 2, wobei
wenn die Steuervorrichtung (61) die mindestens eine der Motoranlasssteuerung und der Anlasssteuerung des elektrischen Kompressors durchführt, die Steuervorrichtung (61) die Ausgabe mindestens eines der Gebläse (71, 72, 73) nach dem Anlassen des Motors (12) oder des elektrischen Kompressors (16) anhebt und anschließend die Ausgabe des verbleibenden einen oder der verbleibenden mehreren Gebläse (71, 72, 73) anhebt.

## Revendications

1. Pompe à chaleur (1) comprenant :
un moteur (12) conçu pour être démarré par un démarreur et entraîner un compresseur entraîné par moteur (13) ;
un moteur de compresseur (15) ;
un compresseur électrique (16) conçu pour être entraîné par le moteur de compresseur (15) ;
un actionneur électrique différent du moteur de compresseur (15) et du compresseur électrique ;
un compresseur (13) entraîné par le moteur (12), relié en parallèle au compresseur électrique (16) ; et
un contrôleur (61) conçu pour effectuer au moins une commande parmi une commande du démarrage du moteur et une commande du démarrage du compresseur électrique, dans laquelle
lors de la commande du démarrage du moteur, le contrôleur (61) abaisse ou maintient la sortie d'au moins un élément parmi le compresseur électrique (16) et l'actionneur électrique à un moment où le moteur démarre, et augmente la sortie du au moins un élément parmi le compresseur électrique (16) et l'actionneur électrique après le démarrage du moteur (12), et
lors de la commande du démarrage du compresseur électrique, le contrôleur abaisse ou maintient la sortie de l'actionneur électrique à un moment où le compresseur électrique démarre, et augmente la sortie de l'actionneur électrique après le démarrage du compresseur électrique, **caractérisée en ce que**
l'actionneur électrique comprend une pluralité de ventilateurs (71, 72, 73) ; et
la fréquence des ventilateurs (71, 72, 73) et du compresseur électrique (16) est abaissée pendant le démarrage du compresseur (13) entraîné par le moteur (12).

2. Pompe à chaleur (1) selon la revendication 1, dans laquelle
lorsque le contrôleur (61) effectue la commande du démarrage du compresseur électrique, au moment où le compresseur électrique démarre, le contrôleur (61) abaisse temporairement la sortie de l'actionneur électrique qui est entraîné.

3. Pompe à chaleur (1) selon la revendication 1, dans laquelle
lorsque le contrôleur (61) effectue la au moins une commande parmi la commande du démarrage du moteur et la commande du démarrage du compresseur électrique, le contrôleur (61) augmente la sortie d'au moins un des ventilateurs (71, 72, 73) après le démarrage du moteur (12) ou du compresseur électrique (16), et augmente ensuite la sortie du ou des ventilateurs (71, 72, 73) restants.

4. Pompe à chaleur (1) selon la revendication 2, dans laquelle
lorsque le contrôleur (61) effectue la au moins une commande parmi la commande du démarrage du moteur et la commande du démarrage du compresseur électrique, le contrôleur (61) augmente la sortie d'au moins un des ventilateurs (71, 72, 73) après le démarrage du moteur (12) ou du compresseur électrique (16), et augmente ensuite la sortie du ou des ventilateurs (71, 72, 73) restants.
